(19) Europäisches Patentamt
European Patent Office
Office européen des brevets

(11) **EP 1 114 093 B1**

(12) # FASCICULE DE BREVET EUROPEEN

(45) Date de publication et mention de la délivrance du brevet:
**13.10.2004 Bulletin 2004/42**

(21) Numéro de dépôt: **00940262.9**

(22) Date de dépôt: **23.05.2000**

(51) Int Cl.[7]: **C08K 3/22**, C08L 21/00, B60C 1/00

(86) Numéro de dépôt international:
**PCT/EP2000/004681**

(87) Numéro de publication internationale:
**WO 2000/073372 (07.12.2000 Gazette 2000/49)**

(54) **COMPOSITION DE CAOUTCHOUC POUR PNEUMATIQUE, A BASE D'ELASTOMERE DIENIQUE ET D'UN OXYDE DE TITANE RENFOR ANT**

KAUTSCHUKZUSAMMENSETZUNG FÜR REIFEN BASIEREND AUF EINEM DIENELASTOMER UND EINEM VERSTÄRKENDEN TITANOXYD

DIENE ELASTOMER AND REINFORCING TITANIUM OXIDE BASED RUBBER COMPOSITION FOR A PNEUMATIC TYRE

(84) Etats contractants désignés:
**BE DE ES FR GB IT NL**

(30) Priorité: **28.05.1999 FR 9906853**

(43) Date de publication de la demande:
**11.07.2001 Bulletin 2001/28**

(73) Titulaires:
- **Sociéte de Technologie Michelin**
  **63000 Clermont-Ferrand Cedex 09 (FR)**
- **MICHELIN RECHERCHE ET TECHNIQUE S.A.**
  **CH-1763 Granges-Paccot (CH)**

(72) Inventeurs:
- **CUSTODERO, Emmanuel**
  **F-63400 Chamalières (FR)**
- **SIMONOT, Laure**
  **F-63000 Clermont-Ferrand (FR)**
- **TARDIVAT, Jean-Claude**
  **F-63000 Clermont-Ferrand (FR)**

(74) Mandataire: **Ribière, Joel**
**Michelin & Cie**
**Service SGD/LG/PI-LAD**
**63040 Clermont-Ferrand Cedex 09 (FR)**

(56) Documents cités:
**EP-A- 0 810 258**
**WO-A-99/28376**
**GB-A- 653 814**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 114 093 B1

Printed by Jouve, 75001 PARIS (FR)

## Description

La présente invention est relative aux compositions de caoutchoucs diéniques utilisables pour la fabrication de pneumatiques ou de produits semi-finis pour pneumatiques, en particulier de bandes de roulement de ces pneumatiques, ainsi qu'aux charges renforçantes susceptibles de renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé et une très bonne résistance à l'usure.

De nombreuses solutions ont ainsi été proposées pour abaisser la résistance au roulement et améliorer l'adhérence des pneumatiques, mais celles-ci se traduisent en général par une déchéance très importante de la résistance à l'usure. Il est bien connu notamment que l'incorporation de charges blanches conventionnelles comme par exemple des silices ou alumines conventionnelles, de la craie, du talc, des oxydes de titane, des argiles telles que la bentonite ou le kaolin par exemple, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc ; on qualifie généralement ces charges blanches, pour cette raison, de charges non renforçantes encore appelées charges inertes.

Une solution efficace à ce problème a été décrite dans la demande de brevet EP-A-0 501 227 qui divulgue une composition de caoutchouc diénique renforcée d'une silice ($SiO_2$) précipitée particulière permettant de fabriquer un pneumatique ayant une résistance au roulement nettement améliorée, sans affecter les autres propriétés en particulier celles d'adhérence, d'endurance et de résistance à l'usure. La demande de brevet européen EP-A-0 810 258 divulgue quant à elle une composition de caoutchouc diénique renforcée d'une autre charge blanche particulière, en l'occurrence une alumine ($Al_2O_3$) spécifique à dispersibilité élevée, qui permet elle aussi l'obtention de pneumatiques ou de bandes de roulement ayant un tel excellent compromis de propriétés contradictoires.

Grâce à ces nouvelles charges blanches qualifiées de renforçantes, on a pu aussi envisager la commercialisation de pneumatiques couleur, notamment de bandes de roulement colorées, qui pour des raisons esthétiques correspondent à une réelle attente des utilisateurs, notamment dans le domaine des véhicules de tourisme, tout en pouvant offrir à ces utilisateurs une économie substantielle de carburant.

Les demandes WO99/02590 et WO99/06480 décrivent notamment des compositions de caoutchouc colorées, à base de silices ou d'alumines renforçantes, utilisées pour la fabrication de pneumatiques comportant des bandes de roulement ou des flancs de différentes couleurs. A titre de charges blanches complémentaires sont utilisées dans ces compositions une ou plusieurs charges inertes (i.e., non renforçantes) ayant la fonction de pigment ou d'agent pastellisant, telles que notamment du kaolin, du talc, de l'oxyde de titane.

Parmi ces charges inertes, les oxydes de titane, en particulier, sont connus depuis fort longtemps comme pigments blancs dans différentes matrices telles que peintures, encres, cosmétiques, matières plastiques et polymères, y compris dans des compositions de caoutchouc destinées en particulier à être incorporées dans des flancs de pneumatiques (voir par ex CA-A-2054059, CA-A-2058901, CA-A-2228692, GB-A-836716, EP-A-697432, les demandes JP1991/006247, JP1995/149950, JP1996/059894).

En plus de leurs propriétés d'agent de pigmentation ou de pastellisation, les oxydes de titane présentent l'avantage de posséder des propriétés anti-U.V. efficaces, particulièrement favorables à la protection anti-vieillissement des compositions de caoutchouc colorées ; ces compositions étant normalement dépourvues de noir de carbone (par ailleurs excellent absorbeur d'U.V.), elles sont en effet très sensibles à l'action dégradante de la lumière solaire (voir demandes WO99/02590 et WO99/06480 précitées) ; en outre, elles ne peuvent pas être protégées par les agents antioxydants (type paraphénylènediamine) conventionnellement utilisés dans les pneumatiques noirs, en raison de l'effet tachant de ces antioxydants.

Or, la Demanderesse a découvert lors de ses recherches qu'il existe des oxydes de titane particuliers qui, dans les compositions de caoutchouc pour pneumatiques, peuvent être utilisés non seulement comme agent anti-vieillissement ou de pigmentation, mais encore, et c'est là que se situe l'apport de l'invention, comme une véritable charge renforçante. Ces oxydes de titane représentent ainsi, de manière inattendue, une alternative avantageuse à l'emploi de silices ou alumines renforçantes, en particulier dans les compositions de caoutchouc colorées où une seule charge blanche peut ainsi en remplacer plusieurs, ce qui simplifie notamment les procédés.

Les compositions de caoutchouc renforcées de ces oxydes de titane particuliers, qualifiés ci-après de renforçants, présentent non seulement des propriétés d'hystérèse et d'adhérence meilleures que celles des compositions conventionnelles chargées de noir de carbone, mais encore une résistance à l'usure nettement améliorée par rapport à celle des compositions de l'art antérieur chargées d'oxydes de titane conventionnels non renforçants.

En conséquence, un premier objet de l'invention concerne une composition de caoutchouc utilisable pour la

fabrication de pneumatiques, comportant au moins (i) un élastomère diénique, (ii) une charge blanche à titre de charge renforçante et (iii) un agent de couplage (charge blanche/élastomère) assurant la liaison entre la charge renforçante et l'élastomère, cette composition étant caractérisée en ce que ladite charge blanche est constituée en tout ou partie d'un oxyde de titane ayant les caractéristiques suivantes:

- (a) sa surface spécifique BET est comprise entre 20 et 200 $m^2/g$;
- (b) sa taille moyenne (en masse) de particules, notée $d_w$, est comprise entre 20 et 400 nm;
- (c) sa vitesse de désagglomération, notée $\alpha$, mesurée au test dit de désagglomération aux ultrasons, à 100% de puissance d'une sonde ultrasons de 600 W, est supérieure à $2.10^{-2}$ $\mu m^{-1}/s$.

L'état de la technique ne décrit ni ne suggère en aucune sorte l'utilisation en composition de caoutchouc pour pneumatique d'un oxyde de titane tel que ci-dessus, ci-après dénommé "oxyde de titane renforçant", capable, sans autre moyen que celui d'un agent de couplage (charge blanche/élastomère) intermédiaire, de renforcer seul des compositions de caoutchouc utilisables pour la fabrication des pneumatiques, notamment des bandes de roulement, et donc présentant une haute résistance à l'usure. On se reportera par exemple à l'enseignement des demandes CA-A-2054059, CA-A-2058901 ou CA-A-2228692 précitées qui, au contraire, soulignent le caractère non-renforçant des oxydes de titane et la nécessité d'additionner une charge renforçante (noir de carbone ou silice) pour donner un niveau de renforcement minimal aux compositions de caoutchouc décrites.

L'invention a également pour objet l'utilisation d'une composition de caoutchouc conforme à l'invention pour la fabrication d'articles en caoutchouc, en particulier de pneumatiques ou de produits semi-finis en caoutchouc destinés à ces pneumatiques, ces articles semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air ou les gommes intérieures étanches pour pneu sans chambre. La composition conforme à l'invention est particulièrement adaptée à la fabrication de flancs ou de bandes de roulement de pneumatiques, en raison de ses bonnes propriétés hystérétiques.

L'invention a également pour objet ces pneumatiques et ces produits semi-finis en caoutchouc eux-mêmes, lorsqu'ils comportent une composition de caoutchouc conforme à l'invention.

L'invention a également pour objet l'utilisation à titre de charge renforçante, dans une composition de caoutchouc diénique utilisable pour la fabrication de pneumatiques, d'un oxyde de titane renforçant.

L'invention a également pour objet un procédé pour renforcer une composition de caoutchouc diénique utilisable pour la fabrication de pneumatiques, ce procédé étant caractérisé en ce qu'on incorpore à cette composition à l'état cru, par malaxage thermo-mécanique, un oxyde de titane renforçant.

La composition de l'invention est particulièrement destinée à la fabrication de pneumatiques colorés ou d'articles semi-finis colorés tels que des bandes de roulement ou des flancs. Par compositions de caoutchouc, pneumatiques ou articles en caoutchouc "de couleur" ou "colorés", on entend dans la présente description des compositions, pneumatiques ou articles en caoutchouc dont une partie au moins est d'une couleur autre que le noir conventionnel, y compris d'une couleur blanche.

L'invention ainsi que ses avantages seront aisément compris à la lumière de la description et des exemples de réalisation qui suivent, ainsi que des figures 1 à 4 relatives à ces exemples qui représentent :

- un schéma de dispositif apte à mesurer la vitesse de désagglomération aux ultrasons ($\alpha$) d'une charge se présentant sous la forme d'agglomérats (fig. 1);
- des courbes d'évolution de la taille des agglomérats au cours d'une sonification à l'aide du dispositif de la figure 1, pour des charges conformes ou non à l'invention, courbes à partir desquelles sont déterminées les vitesses de désagglomération $\alpha$ (fig. 2 et fig. 3);
- des courbes de variation de module en fonction de l'allongement pour différentes compositions de caoutchouc diénique, conformes ou non à l'invention (fig. 4).

## I. MESURES ET TESTS UTILISES

### I-1. Caractérisation des charges renforçantes

Les charges décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat, et non dans celui de particule élémentaire éventuelle pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires agrégées

entre elles.

Ces charges sont caractérisées comme indiqué ci-après.

a) surface spécifique BET:

La surface spécifique BET est déterminée de manière connue, selon la méthode de Brunauer-Emmet-Teller décrite dans "*The Journal of the American Chemical Society*" Vol. 60, page 309, février 1938 et correspondant à la norme AFNOR-NF-T 45 007 (novembre 1987).

b) taille moyenne des particules $d_w$ :

La taille moyenne (en masse) des particules, notée $d_w$, est mesurée de manière classique après dispersion, par désagglomération aux ultrasons, de la charge à analyser dans une solution aqueuse d'hexamétaphosphate de sodium à 0,6% en poids.

La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.

On réalise une suspension de 0,8 g d'échantillon de charge à analyser dans 40 ml d'eau contenant à titre d'agent tensioactif 6 g/l d'hexamétaphosphate de sodium, par action durant 8 minutes, à 60% de puissance (60% de la position maxi du *"output control"*), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules et la taille moyenne en masse des particules $d_w$ sont calculées par le logiciel du sédimentomètre "XDC" ($d_w = \Sigma(n_i\ d_i^5) / \Sigma(n_i\ d_i^4)$) avec $n_i$ nombre d'objets de la classe de taille ou diamètre $d_i$).

c) vitesse de désagglomération $\alpha$:

La vitesse de désagglomération notée $\alpha$ est mesurée au test dit "test de désagglomération aux ultrasons", à 100% de puissance d'une sonde de 600 W (watts). Ce test permet de mesurer en continu l'évolution de la taille moyenne (en volume) des agglomérats de particules durant une sonification, selon les indications ci-après.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvem Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité (40 mg) de charge à analyser est introduite dans le préparateur avec 160 ml d'une solution aqueuse contenant 0,5 g/l d'hexamétaphosphate de sodium, la vitesse de circulation étant fixée à son maximum. Au moins trois mesures consécutives sont réalisées pour déterminer selon la méthode de calcul connue de Fraunhofer (matrice de calcul Malvem 3$$D) le diamètre initial moyen (en volume) des agglomérats, noté $d_v[0]$. La sonification est ensuite établie à une puissance de 100% (soit 100% de la position maxi du "tip amplitude") et on suit durant 8 minutes environ l'évolution du diamètre moyen en volume $d_v[t]$ en fonction du temps "t" à raison d'une mesure toutes les 10 secondes environ. Après une période d'induction (environ 3-4 minutes), il est observé que l'inverse du diamètre moyen en volume $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 4 et 8 minutes environ). Elle est exprimée en $\mu m^{-1}/s$.

La figure 1 schématise le dispositif de mesure utilisé pour la réalisation de ce test de désagglomération aux ultrasons. Ce dispositif consiste en un circuit fermé 1 dans lequel peut circuler un flux 2 d'agglomérats de particules en suspension dans un liquide 3. Ce dispositif comporte essentiellement un préparateur d'échantillon 10, un granulomètre laser 20 et une cellule de traitement 30. Une mise à la pression atmosphérique (13, 33), au niveau du préparateur d'échantillon 10 et de la cellule de traitement 30 elle-même, permet l'élimination en continu des bunes d'air qui se forment durant la sommcation (i.e. l'action de la sonde ultrasons).

Le préparateur d'échantillon 10 ("Malvem Small Sample Unit MSX1") est destiné à recevoir l'échantillon de charge à tester (en suspension dans le liquide 3) et à le faire circuler à travers le circuit 1 à la vitesse préréglée (potentiomètre 17 - vitesse maximum d'environ 3 1/min), sous la forme d'un flux 2 de suspension liquide. Ce préparateur 10 consiste simplement en une cuve de réception qui contient, et à travers laquelle circule, la suspension à analyser. Il est équipé d'un moteur d'agitation 15, à vitesse modulable, afin d'éviter une sédimentation des agglomérats de particules de la suspension ; une mini-pompe centrifuge 16 est destinée à assurer la circulation de la suspension 2 dans le circuit 1 ; l'entrée 11 du préparateur 10 est reliée à l'air libre via une ouverture 13 destinée à recevoir l'échantillon de charge à tester et/ou le liquide 3 utilisé pour la suspension.

Au préparateur 10 est connecté un granulomètre laser 20 ("Mastersizer S") dont la fonction est de mesurer en continu, à intervalles de temps réguliers, la taille moyenne en volume "$d_v$" des agglomérats, au passage du flux 2, grâce à une cellule de mesure 23 à laquelle sont couplés les moyens d'enregistrement et de calcul automatiques du granulomètre 20. On rappelle ici brièvement que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la taille moyenne en volume de cette distribution ($d_v = \Sigma(n_i\ d_i^4) / \Sigma(n_i\ d_i^3)$ avec $n_i$ nombre d'objets de la classe de taille ou diamètre $d_i$).

Intercalée entre le préparateur 10 et le granulomètre laser 20 se trouve enfin une cellule de traitement 30 équipée d'une sonde ultrasons 35 (convertisseur 34 et tête de sonde 36) destinée à casser en continu les agglomérats de particules au passage du flux 2.

La cellule de traitement 30 est disposée entre la sortie 22 du granulomètre 20 et l'entrée 11 du préparateur 10, de telle manière que, en fonctionnement, le flux 2 de particules sortant du préparateur 10 traverse d'abord le granulomètre laser 20 avant d'entrer dans la cellule de traitement 30. Cette disposition a deux avantages majeurs pour les mesures : d'une part, les bulles d'air dues à l'action de la sonde ultrasons sont éliminées à la traversée du préparateur 10 (qui est à l'air libre), c'est-à-dire avant l'entrée dans le granulomètre 20, et elles ne perturbent donc pas la mesure de diffraction laser ; d'autre part, l'homogénéité de la suspension est améliorée par un passage préalable dans le préparateur 10.

La cellule de traitement 30 est en outre agencée de telle manière que le flux 2 de particules qui y pénètre, par une entrée 31, passe d'abord devant la tête 36 de la sonde ultrasons 35 ; cette disposition non conventionnelle (le flux 2 entre par le bas 31 de la cellule, et non par le haut 32) présente les avantages suivants: d'une part, toute la suspension circulante 2 est forcée de passer devant l'extrémité 36 de la sonde ultrasons 35, zone la plus active en termes de désagglomération ; d'autre part, cette disposition permet un premier dégazage après sonification dans le corps de la cellule de traitement 30 elle-même, la surface de la suspension 2 étant alors en contact avec l'atmosphère au moyen d'un tuyau 33 de faible diamètre.

Le flux 2 est de préférence thermostaté par l'intermédiaire d'un circuit de refroidissement 40 disposé, au niveau de ia cellule 30, dans une double enveloppe entourant la sonde 35, la température étant contrôlée par exemple par une sonde de température 14 plongeant dans le liquide 3 au niveau du préparateur 10. La disposition des différents éléments du dispositif de mesure est optimisée de façon à limiter autant que possible le volume circulant, c'est-à-dire la longueur des tuyaux de raccordement (par exemple des tuyaux souples).

I-2. Caractérisation des compositions de caoutchouc

Les compositions de caoutchouc sont caractérisées, avant et après cuisson, comme indiqué ci-après.

a) plasticité Mooney:

On utilise un consistomètre oscillant tel que décrit dans la norme AFNOR-NFT-43005 (novembre 1980). La mesure de plasticité Mooney se fait selon le principe suivant : la composition à l'état cru est moulée dans une enceinte cylindrique chauffée à 100°C. Après une minute de préchauffage, le rotor tourne au sein de l'éprouvette à 2 tours/ minute et on mesure le couple utile pour entretenir ce mouvement après 4 minutes de rotation. La plasticité Mooney (MS 1+4) est exprimée en "unités Mooney" (UM) avec 1 UM = 0,83 N.m (Newton.mètre).

b) essais de traction:

Ces essais permettent de déterminer les contraintes d'élasticité et les propriétés à la rupture. Ils sont effectués, sauf indications différentes, conformément à la norme AFNOR-NFT-46002 (septembre 1988).

On mesure les modules sécants à 10 % d'allongement (M10), 100 % d'allongement (M100) et 300 % d'allongement (M300) ; ces modules sont calculés en se ramenant à la section réelle de l'éprouvette et, sauf indication différente, sont mesurés en seconde élongation (i.e. après un cycle d'accommodation). Toutes ces mesures de traction sont effectuées dans les conditions normales de température et d'hygrométrie selon la norme AFNOR-NFT-40101 (décembre 1979). Un traitement des enregistrements de traction permet également de tracer la courbe de module en fonction de l'allongement (voir figure 4 annexée), le module utilisé ici étant le module sécant mesuré en première élongation (i.e. sans cycle d'accommodation), calculé en se ramenant à la section réelle de l'éprouvette.

c) pertes hystérétiques:

Les pertes hystérétiques (PH) sont mesurées par rebond à 60°C au 6ème choc, et exprimées en % selon la relation suivante:

$$PH (\%) = 100 [ (W_0 - W_1) / W_0] ,$$

avec $W_0$ : énergie fournie ; $W_1$ : énergie restituée.

d) propriétés dynamiques:

Les propriétés dynamiques, notées $\Delta G^*$ et $\tan(\delta)_{max}$, mesurées en fonction de la déformation, sont effectuées à 10 Hz avec une déformation crête-crête allant de 0,15% à 50%. La non-linéarité $\Delta G^*$ est la différence de module de cisaillement entre 0,15% et 50% de déformation, exprimée en MPa. L'hystérèse est exprimée par la mesure de tan $(\delta)_{max}$ qui correspond au maximum de $\tan(\delta)$.

**II. CONDITIONS DE REALISATION DE L'INVENTION**

Outre les additifs habituels ou ceux susceptibles d'être utilisés dans une composition de caoutchouc vulcanisable au soufre et utilisable pour la fabrication de pneumatiques, les compositions selon l'invention comportent, comme constituants de base, (i) au moins un élastomère diénique, (ii) au moins une charge blanche renforçante et (iii) au moins un agent de couplage entre la charge et l'élastomère, ladite charge renforçante étant constituée en tout ou partie d'un oxyde de titane renforçant tel que décrit en détails ci-après.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - tout copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) - tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et de 1 % à 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode préférentiel de réalisation de l'invention, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) ou un mélange de deux ou plus de ces composés.

Lorsque la composition conforme à l'invention est destinée à une bande de roulement pour pneumatique, l'élastomère diénique est de préférence un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possédant de préférence plus de 90% de liaisons cis-1,4.

Selon un autre mode de réalisation avantageux de l'invention, notamment lorsqu'elle est destinée à un flanc de pneumatique, la composition conforme à l'invention peut contenir au moins un élastomère diénique essentiellement insaturé, en particulier au moins un copolymère EPDM, que ce copolymère soit par exemple utilisé ou non en mélange avec un ou plusieurs des élastomères diéniques fortement insaturés cités précédemment.

Bien entendu, les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

<u>II-2. Charge renforçante</u>

Dans la présente demande, on entend par charge blanche "renforçante" une charge blanche (i.e., inorganique, en particulier minérale, parfois appelée aussi charge claire), capable de renforcer à elle seule, sans autre moyen qu'un agent de couplage intermédiaire, une composition de caoutchouc destinée à la fabrication de pneumatiques, en d'autres termes capable de remplacer dans sa fonction de renforcement une charge conventionnelle de noir de carbone de grade pneumatique.

La composition conforme à l'invention est renforcée par une charge blanche renforçante constituée en tout

ou partie d'un oxyde de titane renforçant, c'est-à-dire ayant les caractéristiques suivantes:

- (a) sa surface spécifique BET est comprise entre 20 et 200 $m^2/g$;
- (b) sa taille moyenne (en masse) de particules, notée $d_w$, est comprise entre 20 et 400 nm;
- (c) sa vitesse de désagglomération, notée $\alpha$, mesurée au test dit de désagglomération aux ultrasons, à 100% de puissance d'une sonde ultrasons de 600 W, est supérieure à $2.10^{-2}$ $\mu m^{-1}/s$.

Par oxyde de titane, on entend tout composé répondant à la formule connue $TiO_2$ ainsi qu'à ses formes hydratées éventuelles, quelle que soit en particulier la forme cristalline de cet oxyde de titane (par exemple rutile, anatase ou mélange des deux variétés cristallines). Cette formule est bien sûr donnée aux impuretés éventuelles près, étant entendu que l'oxyde de titane peut comporter une très faible proportion d'impuretés liées notamment aux procédés et matières premières mis en oeuvre pour sa fabrication.

On sait de manière générale que pour obtenir les propriétés de renforcement optimales conférées par une charge, il convient notamment que cette dernière soit présente dans la matrice caoutchouteuse sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et d'autre part à se désagglomérer afin de se disperser de façon homogène dans cette matrice.

La dispersibilité intrinsèque d'une charge peut être évaluée à l'aide du test dit de désagglomération aux ultrasons décrit au chapitre I précédent, par mesure de sa vitesse de désagglomération $\alpha$.

On a constaté que pour une vitesse $\alpha$ supérieure à $2.10^{-2}$ $\mu m^{-1}/s$, l'oxyde de titane présente une bonne dispersibilité, c'est-à-dire que peu d'agglomérats microniques sont observés par réflexion en microscopie optique sur une coupe de composition caoutchouteuse préparée selon les règles de l'art.

Pour une dispersion encore meilleure de l'oxyde de titane renforçant dans la matrice de caoutchouc diénique, et donc pour un renforcement optimal, on préfère que la vitesse de désagglomération $\alpha$ soit supérieure à $5.10^{-2}$ $\mu m^{-1}/s$. Ceci est particulièrement avantageux notamment lorsque l'invention est mise en oeuvre pour la fabrication de bandes de roulement présentant une faible résistance au roulement.

Pour une surface BET inférieure à 20 $m^2/g$, les compositions présentent certes une mise en oeuvre facilitée et une hystérèse réduite, mais on observe une déchéance des propriétés à la rupture et une résistance à l'usure, en pneumatique, qui diminue ; pour des surfaces BET supérieures à 200 $m^2/g$, la mise en oeuvre à l'état cru devient plus difficile (plasticité Mooney plus élevée) et la dispersion de la charge s'en trouve dégradée. Pour des tailles $d_w$ trop élevées, supérieures à 400 nm, les particules se comportent comme des défauts qui localisent les contraintes et sont préjudiciables à l'usure ; des tailles $d_w$ trop petites, inférieures à 20 nm, vont par contre pénaliser la mise en oeuvre à l'état cru et la dispersion de la charge au cours de cette mise en oeuvre. Pour toutes les raisons exposées ci-dessus, la surface BET est de préférence comprise dans un domaine allant de 30 à 150 $m^2/g$ et la taille de particules $d_w$ est de préférence comprise dans un domaine allant de 30 à 200 nm.

Plus préférentiellement encore, notamment lorsque les compositions de l'invention sont destinées à des bandes de roulement de pneumatiques présentant une faible résistance au roulement, les oxydes de titane renforçants vérifient au moins l'une des caractéristiques suivantes, de préférence les deux :

- surface BET comprise dans un domaine de 40 à 140 $m^2/g$;
- taille de particules $d_w$ comprise dans un domaine de 50 à 150 nm.

Les particules d'oxyde de titane présentent en outre une réactivité de surface suffisante, i.e. un taux suffisant de fonctions de surface (Ti-OH) réactives vis-à-vis de l'agent de couplage, ce qui est particulièrement favorable à la fonction de renforcement remplie par la charge, et donc aux propriétés mécaniques des compositions de caoutchouc de l'invention.

Bien entendu, l'état physique sous lequel peut se présenter l'oxyde de titane renforçant est indifférent, que ce soit sous forme de poudre, de microperles, de granulés, de pellets, de billes ou toute autre forme densifiée.

L'oxyde de titane renforçant décrit ci-dessus peut être utilisé seul ou associé à une ou plusieurs autre(s) charge(s) renforçante(s), par exemple à une seconde charge blanche telle qu'une silice ou une alumine renforçante. Dans le cas d'une silice, on utilise de préférence une silice précipitée hautement dispersible, en particulier lorsque l'invention est mise en oeuvre pour la fabrication de pneumatiques présentant une faible résistance au roulement ; comme exemples non limitatifs de telles silices hautement dispersibles préférentielles, on peut citer les silices BV3380 et Ultrasil 7000 de la société Degussa, les silices Zeosil 1165MP et 1115MP de la société Rhône-Poulenc, la silice Hi-Sil 2000 de la société PPG, les silices Zeopol 8715 ou 8745 de la Société Huber. Si une alumine renforçante est utilisée, il s'agit préférentiellement d'une alumine hautement dispersible telle que décrite dans la demande EP-A-0 810 258 précitée, par exemple des alumines A125 ou CR125 (société Baïkowski), APA-100RDX (société Condéa), Aluminoxid C (société Degussa) ou AKP-G015 (Sumitomo Chemicals).

L'oxyde de titane renforçant, seul ou éventuellement associé à une seconde charge blanche, peut également être utilisé en coupage, i.e. en mélange, avec un ou plusieurs noirs de carbone conventionnels de grade pneumatique. Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité étant toutefois préférentiellement inférieure à la quantité de charge blanche renforçante présente dans la composition de caoutchouc .

De préférence, dans les compositions conformes à l'invention, l'oxyde de titane renforçant constitue la majorité, i.e. plus de 50 % en poids, de la charge renforçante totale ; il peut avantageusement constituer la totalité de la charge renforçante.

De manière préférentielle, le taux de charge renforçante totale dans les compositions de l'invention, est compris dans un domaine allant de 20 à 400 pce, plus préférentiellement de 30 à 200 pce, l'optimum étant différent selon les applications visées : de manière connue, le niveau de renforcement attendu sur un pneumatique vélo, par exemple, est nettement inférieur à celui exigé sur un pneumatique pour véhicule de tourisme ou pour véhicule utilitaire tel que poids lourd. Plus préférentiellement encore, en particulier lorsque les compositions de l'invention sont destinées à des bandes de roulement de pneumatiques, le taux de charge blanche renforçante est choisi compris entre 50 et 150 pce.

A titre d'exemple d'oxyde de titane renforçant convenant aux compositions de caoutchouc de l'invention, on citera l'oxyde de titane commercialisé par la société Degussa sous l'appellation "P25" (environ 70% anatase et 30% rutile - pureté supérieure à 99,5%), essentiellement comme agent de protection anti-UV dans des préparations cosmétiques ou médicinales, ou encore comme stabilisant thermique des polymères silicones.

II-3. Agent de couplage

Il est bien connu de l'homme du métier qu'il est nécessaire d'utiliser, pour une charge blanche renforçante telle que par exemple une silice ou une alumine renforçante, un agent de couplage (charge blanche/élastomère), encore appelé agent de liaison, qui a pour fonction d'assurer la liaison (ou "couplage") entre la charge blanche et l'élastomère, tout en facilitant la dispersion de cette charge blanche au sein de la matrice élastomérique.

L'oxyde de titane renforçant décrit précédemment nécessite lui aussi l'emploi d'un tel agent de couplage pour assurer pleinement sa fonction de charge renforçante dans les compositions de caoutchouc conformes à l'invention.

Par agent de "couplage" (charge/élastomère), on entend plus précisément un agent apte à établir une connexion suffisante, de nature chimique et/ou physique, entre la charge considérée et l'élastomère, tout en facilitant la dispersion de cette charge au sein de la matrice élastomérique ; un tel agent de couplage, au moins bifonctionnel, a par exemple comme formule générale simplifiée " Y-T-X ", dans laquelle:

- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour ou susceptible d'assurer efficacement, dans les compositions de caoutchouc diénique utilisables pour la fabrication de pneumatiques, la liaison ou couplage entre silice et élastomère diénique, tels que par exemple des organosilanes, notamment des alkoxysilanes polysulfurés ou des mercaptosilanes, ou des polyorganosiloxanes porteurs des fonctions X et Y précitées.

On utilise en particulier des alkoxysilanes polysulfurés tels que décrits par exemple dans les brevets US-A-3 842 111, US-A-3 873 489, US-A-3 978 103, US-A-3 997 581, US-A-4 002 594, ou dans les brevets plus récents US-A-5 580 919, US-A-5 583 245, US-A-5 663 396, US-A-5 684 171, US-A-5 684 172, US-A-5 696 197, qui décrivent en détail de tels composés connus.

Conviennent en particulier pour la mise en oeuvre de l'invention, sans que la définition ci-après soit limitative,

des alkoxysilanes polysulfurés dits "symétriques" répondant à la formule générale (I) suivante:

$$\text{(I)} \qquad Z - A - S_n - A - Z \,,$$

dans laquelle:

- n est un entier de 2 à 8 (de préférence de 2 à 5);
- A est un radical hydrocarboné divalent (de préférence des groupements alkylène en C,-$C_{18}$ ou des groupements arylène en $C_6$-$C_{12}$, plus particulièrement des alkylènes en $C_1$-$C_{10}$, notamment en $C_2$-$C_4$, en particulier le propylène);
- Z répond à l'une des formules ci-après:

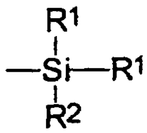 ; 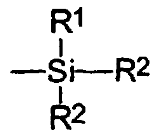 ; 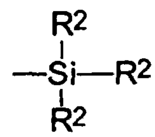 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).

- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus particulièrement le méthoxyle et/ou l'éthoxyle.

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris entre 2 et 5.

Comme alkoxysilanes polysulfurés, on citera plus particulièrement les polysulfures (notamment les disulfures ou tétrasulfures) de bis(alkoxyl($C_1$-$C_4$)-silylpropyl), notamment de bis(trialkoxyl($C_1$-$C_4$)-silylpropyl), en particulier les polysulfures de bis(3-triméthoxysilylpropyl) ou de bis(3-triéthoxysilylpropyl). Parmi ces composés, on utilise de préférence le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas, mélange commercial de polysulfures avec une valeur moyenne pour n qui est proche de 4).

L'homme du métier saura ajuster la teneur en agent de couplage dans les compositions de l'invention, en fonction de l'application visée, de la nature de l'élastomère utilisé et de la quantité d'oxyde de titane renforçant, complété le cas échéant de toute autre charge blanche utilisée à titre de charge renforçante complémentaire.

De manière à tenir compte des différences de surface spécifique et de densité des charges blanches renforçantes susceptibles d'être utilisées, ainsi que des masses molaires des agents de couplage, il est préférable de déterminer le taux optimal d'agent de couplage en moles par mètre carré de charge blanche renforçante, pour chaque charge blanche utilisée ; ce taux optimal est calculé à partir du rapport pondéral [agent de couplage/charge blanche renforçante], de la surface BET de la charge et de la masse molaire de l'agent de couplage (notée M ci-après), selon la relation suivante:

$$(\text{moles/m}^2 \text{ charge blanche}) = [\text{agent de couplage/charge blanche}]\ (1/\text{BET})\ (1/M)$$

Préférentiellement, la quantité d'agent de couplage utilisée dans les compositions conformes à l'invention est

comprise entre $10^{-7}$ et $10^{-5}$ moles par mètre carré de charge blanche renforçante totale, soit par mètre carré d'oxyde de titane renforçant lorsque ce dernier constitue la seule charge blanche renforçante présente. Plus préférentiellement encore, la quantité d'agent de couplage est comprise entre $5.10^{-7}$ et $5.10^{-6}$ moles par mètre carré de charge blanche renforçante totale.

Compte tenu des quantités exprimées ci-dessus, de manière générale, le taux d'agent de couplage, ramené au poids d'élastomère diénique, sera de préférence compris entre 1 et 20 pce, plus préférentiellement compris entre 3 et 15 pce.

Bien entendu, l'agent de couplage utilisé pourrait être préalablement greffé (via la fonction "X") sur l'élastomère diénique de la composition de l'invention, l'élastomère ainsi fonctionnalisé ou "précouplé" comportant alors la fonction "Y" libre pour l'oxyde de titane renforçant. L'agent de couplage pourrait également être préalablement greffé (via la fonction "Y") sur l'oxyde de titane renforçant, la charge ainsi "précouplée" pouvant ensuite être liée à l'élastomère diénique par l'intermédiaire des fonctions libres "X".

On préfère toutefois utiliser l'agent de couplage à l'état libre (i.e., non greffé) ou greffé sur l'oxyde de titane renforçant, notamment pour des raisons de meilleure mise en oeuvre ("*processability*") des compositions à l'état cru.

II-4. Additifs divers

Bien entendu, les compositions conformes à l'invention contiennent, outre les composés déjà décrits, tout ou partie des constituants habituellement utilisés dans les compositions de caoutchouc diénique destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc ... A la charge blanche renforçante de l'invention peut être également associée, si besoin est, une charge blanche conventionnelle non renforçante, comme par exemple des argiles, la bentonite, le talc, la craie, le kaolin, voire des oxydes de titane conventionnels remplissant une fonction connue d'agent de pigmentation ou de protection anti-UV.

Pour la fabrication de compositions de caoutchouc de couleur, on peut aussi utiliser tout type d'agent colorant connu de l'homme du métier, cet agent colorant pouvant être organique ou inorganique, soluble ou non dans les compositions conformes à l'invention. A titre d'exemple, on peut citer des colorants minéraux tels que par exemple des métaux en poudre, notamment du cuivre ou de l'aluminium en poudre, ou divers oxydes métalliques, notamment des silicates, des aluminates, des titanates, des oxydes ou hydroxydes de fer, des oxydes mixtes d'éléments métalliques différents tels que Co, Ni, Al, Zn. On peut citer également des pigments organiques tels que des indanthrones, des dikéto-pyrrolo-pyrroles ou des condensés diazo, des pigments organométalliques tels que des phtalocyanines. La couleur des compositions conformes à l'invention peut ainsi varier dans une très large gamme, à titre d'exemple dans différentes teintes de rouge, orange, vert, jaune, bleu ou encore de marron ou de gris. On peut également ne pas utiliser d'agent colorant, et choisir de garder la couleur d'origine de la charge renforçante, que cette dernière soit blanche ou ait été précolorée.

Pour la protection anti-vieillissement des compositions de caoutchouc couleur conformes à l'invention, on peut utiliser avantageusement des systèmes de protection tels que décrits dans les demandes WO99/02590 et WO99/06480 précitées.

Les compositions de caoutchouc conformes à l'invention peuvent également contenir, en complément des agents de couplage précités, des agents de recouvrement (comportant par exemple la seule fonction Y) de la charge blanche renforçante ou plus généralement des agents d'aide à la mise en oeuvre susceptibles de manière connue, grâce à une amélioration de la dispersion de la charge blanche dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-5. Préparation des compositions

Les compositions de caoutchouc sont préparées en mettant en oeuvre les élastomères diéniques selon des techniques tout à fait connues de l'homme du métier, par exemple par travail thermomécanique en une ou deux étapes dans un mélangeur interne à palettes, suivi d'un mélangeage sur mélangeur externe au cours duquel est incorporé le système de vulcanisation (réticulation), comme décrit par exemple dans la demande EP-A-0 501 227 précitée.

Selon un procédé classique en une étape, par exemple, on introduit dans un mélangeur interne usuel tous les constituants nécessaires à l'exception du système de vulcanisation ; lorsque la densité apparente de la charge est faible, il peut être préférable de fractionner son introduction en plusieurs parties. Le résultat de cette première étape de malaxage est repris ensuite sur un mélangeur externe, généralement un mélangeur à cylindres, et on y ajoute alors

le système de vulcanisation. Une seconde étape peut être ajoutée dans le mélangeur interne, essentiellement dans le but de faire subir au mélange un traitement thermo-mécanique complémentaire.

Il va de soi que l'invention concerne les compositions précédemment décrites tant à l'état cru (i.e., avant cuisson) qu'à l'état cuit (i.e., après réticulation ou vulcanisation).

Bien entendu, les compositions conformes à l'invention peuvent être utilisées seules ou en coupage avec toute autre composition de caoutchouc utilisable pour la fabrication de pneumatiques.

**III. EXEMPLES DE REALISATION DE L'INVENTION**

III-1. Charges utilisées

Les caractéristiques des charges utilisées dans les exemples qui suivent sont résumées dans le tableau 1. La charge notée A est un oxyde de titane renforçant (P25 de la société Degussa) alors que la charge B est un oxyde de titane conventionnel (Pronox RKB6 de la société Bayer), non renforçant, utilisable par exemple comme pigment blanc dans des flancs de pneumatique de couleur blanche.

On note en outre que la charge A vérifie avantageusement l'ensemble des caractéristiques préférentielles qui suivent :

- surface BET comprise dans un domaine de 40 à 140 $m^2/g$ ;
- taille de particules $d_w$ comprise dans un domaine de 50 à 150 nm ;
- vitesse de désagglomération $\alpha$ supérieure à $5.10^{-2}$ $\mu m^{-1}/s$.

Les figures 2 et 3 reproduisent les courbes d'évolution [$1/d_v(t) = f(t)$] de la taille des agglomérats, enregistrées au test de désagglomération aux ultrasons, respectivement pour les charges A et B. On voit bien sur ces figures 2 et 3 que les premiers points enregistrés ("t" variant de 0 à 30 s environ) correspondent à la mesure du diamètre moyen initial $d_v[0]$, suivie (après mise en action de la sonde ultrasons) d'un passage progressif (ici, "t" de 30 s à 3-4 min environ) à un régime stable de désagglomération pendant lequel l'inverse de "$d_v$" varie sensiblement linéairement avec le temps "t" ; l'enregistrement des données est stoppé ici au bout de 8 min environ. On en déduit par un calcul élémentaire de régression linéaire, pris en charge par le calculateur du granulomètre, la vitesse de désagglomération $\alpha$ dans la zone de régime stable de désagglomération (entre 4 et 8 minutes).

III-2. Préparation des compositions

Les compositions testées ci-après sont préparées de manière connue, de la façon suivante : on introduit l'élastomère diénique dans un mélangeur interne de capacité 300 ml, rempli à 75 % et dont la température initiale de cuve est d'environ 90°C ; puis, après un temps approprié de malaxage, par exemple de l'ordre de 1 minute, on ajoute tous les autres ingrédients, y compris la charge et l'agent de couplage associé, à l'exception du système de vulcanisation. On conduit alors un travail thermomécanique d'une durée de 10 minutes environ, avec une vitesse moyenne des palettes de 70 tours/min, jusqu'à obtenir une température de tombée d'environ 160°C.

On récupère le mélange ainsi obtenu puis on ajoute le système de vulcanisation (soufre et accélérateur primaire type sulfénamide) sur un mélangeur externe (homo-finisseur) à 30°C. La vulcanisation (cuisson) est effectuée à 150°C pendant 40 minutes.

III-3. Essais

On compare ci-après deux compositions de caoutchouc diénique destinées à la fabrication de pneumatiques ou de bandes de roulement pour pneumatiques, utilisables notamment pour la fabrication de pneumatiques couleur.

L'élastomère diénique est un SBR (copolymère de styrène-butadiène) préparé en solution et comportant 25% de styrène, 58% de motifs polybutadiène 1-2 et 23 % de motifs polybutadiène 1-4 trans.

Ces deux compositions sont identiques aux différences près qui suivent:

- composition N°1 (conforme à l'invention): charge constituée par l'oxyde de titane renforçant (charge A);
- composition N°2 (non conforme à l'invention): charge constituée par l'oxyde de titane conventionnel, i.e., non-renforçant (charge B).

Les tableaux 2 et 3 donnent successivement la formulation des différentes compositions (tableau 2 - taux des différents produits exprimés en pce), leurs propriétés avant et après cuisson à 150°C pendant 40 minutes (tableau 3). La figure 4 reproduit les courbes de module (en MPa) en fonction de l'allongement (en %) ; ces courbes sont notées

C1 et C2 et correspondent respectivement aux compositions de caoutchouc N°1 et N°2.

L'agent de couplage TESPT (Si69) a été introduit ici à un taux correspondant à une couverture de surface d'environ $9,4.10^{-7}$ mole/$m^2$ de charge blanche (oxyde de titane), que cette charge blanche soit renforçante ou non ; en effet, pour les besoins de cet essai comparatif, on a également utilisé l'agent de couplage dans la composition témoin ne comportant qu'un oxyde de titane conventionnel (non renforçant). La charge B non renforçante a été introduite à iso-volume par rapport à la charge A renforçante.

L'étude des différents résultats montre que la composition N°1 présente après cuisson un niveau de renforcement nettement supérieur à celui de la composition témoin N°2:

- contrainte à la rupture supérieure (de plus de 27%);
- modules aux fortes déformations (M100 et M300) et rapport (M300/M100) nettement plus élevés, indicateurs clairs pour l'homme du métier d'un meilleur renforcement de la composition conforme à l'invention;
- la figure 4 annexée confirme bien ces résultats : pour des allongements de 100% et plus, on note que le module est notablement supérieur dans le cas de la composition N°1, et ceci d'autant plus que l'allongement augmente ; ce comportement illustre clairement une bien meilleure interaction entre la charge blanche renforçante et l'élastomère.

Les propriétés d'hystérèse (pertes PH, propriétés dynamiques $\Delta G^*$ et $\tan(\delta)_{max}$) montrent par ailleurs un gain substantiel (i.e., une hystérèse plus basse) par rapport à des compositions conventionnelles renforcées de noir de carbone (comparativement, PH de l'ordre de 32%, $\Delta G^*$ d'environ 6,3 MPa et $\tan(\delta)_{max}$ d'environ 0,36 pour un noir de carbone grade pneumatique type N234).

Quant aux valeurs de plasticité Mooney, elles restent basses tant sur la composition témoin N°2 (ce qui était attendu, compte tenu de l'absence de renforcement par l'oxyde de titane conventionnel) que sur la composition conforme à l'invention chargée d'oxyde de titane renforçant, comparativement par exemple à des compositions conventionnelles renforcées de noir de carbone (plasticité de 64 UM environ dans le cas d'un noir de carbone N234) ; ceci est synonyme d'une bonne aptitude de mise en oeuvre à l'état cru pour les compositions conformes à l'invention.

En résumé, les oxydes de titane spécifiques des compositions conformes à l'invention confèrent à ces dernières de nombreuses propriétés avantageuses, notamment lorsque ces compositions sont utilisées dans des pneumatiques de couleur à faible résistance au roulement, ou dans des bandes de roulement de couleur destinées à de tels pneumatiques:

- tout d'abord, une amélioration de la résistance au vieillissement et à l'action des rayons U.V., favorable en particulier à l'esthétique et la stabilité des couleurs;

- ensuite, une amélioration de l'hystérèse, induisant une diminution de la résistance au roulement, ainsi qu'un gain d'adhérence sur sol mouillé, glacé ou enneigé, par rapport au noir de carbone;

- enfin, une capacité de renforcement, et donc de résistance à l'usure pour les compositions qui les contiennent, jusqu'ici inconnues avec les oxydes de titane conventionnellement utilisés dans les compositions de caoutchouc pour pneumatiques de l'art antérieur.

Tableau 1

| charge $TiO_2$: | A | B |
|---|---|---|
| Densité He (g/ml) | 3.81 | 3.85 |
| Surface BET ($m^2$/g) | 50 | 9 |
| $d_w$ (nm) | 91 | 1860 |
| $\alpha$ ($\mu m^{-1}$/s) | 0.113 | 0.013 |

Tableau 2

| Numéro de la composition: | 1 | 2 |
|---|---|---|
| SBR (1) | 100 | 100 |

(1) Copolymère de butadiène styrène

Tableau 2 (suite)

| Numéro de la composition: | 1 | 2 |
|---|---|---|
| charge A | 95 | - |
| charge B | - | 96 |
| Si69 | 2.4 | 0.4 |
| ZnO | 2.5 | 2.5 |
| cire anti-ozone | 1.5 | 1.5 |
| acide stéarique | 2 | 2 |
| antioxydant(2) | 1.9 | 1.9 |
| DPG (3) | 0.6 | 0.6 |
| soufre | 1.5 | 1.5 |
| CBS (4) | 2.5 | 2.5 |

(2) N-1,3 diméthylbutyl N-phénylparaphénylènediamine
(3) Diphénylguanidine
(4) N-cyclohexyl-2-benzothiazylsulfénamide

Tableau 3

| Numéro de la composition : | 1 | 2 |
|---|---|---|
| Plasticité (UM) | 42 | 28 |
| M10 (MPa) | 4.1 | 3.1 |
| M100 (MPa) | 3.5 | 3.0 |
| M300 (MPa) | 8.6 | 4.6 |
| M300/M100 | 2.5 | 1.5 |
| contrainte rupture (MPa) | 9.8 | 7.4 |
| PH (%) | 16.9 | 9.7 |
| $\Delta G^*$ (MPa) | 1.69 | 0.45 |
| $\tan(\delta)_{max}$ | 0.260 | 0.168 |

## Revendications

**1.** Composition de caoutchouc utilisable pour la fabrication de pneumatiques, comportant au moins (i) un élastomère diénique, (ii) une charge blanche à titre de charge renforçante et (iii) un agent de couplage (charge blanche/élastomère), **caractérisée en ce que** ladite charge blanche est constituée en tout ou partie d'un oxyde de titane ayant les caractéristiques suivantes:

- (a) sa surface spécifique BET est comprise entre 20 et 200 $m^2/g$;
- (b) sa taille moyenne (en masse) de particules, notée $d_w$, est comprise entre 20 et 400 nm;
- (c) sa vitesse de désagglomération, notée $\alpha$, mesurée au test dit de désagglomération aux ultrasons, à 100% de puissance d'une sonde ultrasons de 600 W, est supérieure à $2.10^{-2}$ $\mu m^{-1}/s$.

**2.** Composition selon la revendication 1, la quantité de charge renforçante totale étant comprise entre 20 et 400 pce (parties en poids pour cent parties d'élastomère).

**3.** Composition selon l'une quelconque des revendications 1 ou 2, la surface BET étant comprise dans un domaine allant de 30 à 150 $m^2/g$.

4. Composition selon l'une quelconque des revendications 1 à 3, la taille $d_w$ étant comprise dans un domaine allant de 30 à 200 nm.

5. Composition selon l'une quelconque des revendications 1 à 4, la vitesse de désagglomération $\alpha$ étant supérieure à 5.10-2 $\mu m^{-1}/s$.

6. Composition selon l'une quelconque des revendications 1 à 5, l'oxyde de titane représentant plus de 50 % en poids de la charge renforçante totale.

7. Composition selon la revendication 6, l'oxyde de titane représentant la totalité de la charge renforçante.

8. Composition selon l'une quelconque des revendications 1 à 6, comportant, outre l'oxyde de titane, de la silice et/ou de l'alumine à titre de charge blanche renforçante.

9. Composition selon l'une quelconque des revendications 1 à 6, comportant, outre l'oxyde de titane, un ou plusieurs noirs de carbone à titre de charge renforçante.

10. Composition selon l'une quelconque des revendications 2 à 9, la quantité de charge renforçante totale étant comprise entre 30 et 200 pce.

11. Composition selon l'une quelconque des revendications 1 à 10, la quantité d'agent de couplage étant comprise entre $10^{-7}$ et $10^{-5}$ mole par mètre carré de charge blanche renforçante.

12. Composition selon la revendication 11, la quantité d'agent de couplage étant comprise entre $5.10^{-7}$ et $5.10^{-6}$ mole par mètre carré de charge blanche renforçante.

13. Composition selon l'une quelconque des revendications 4 à 12, l'oxyde de titane vérifiant au moins l'une des caractéristiques suivantes:

- sa surface BET est comprise dans un domaine de 40 à 140 $m^2/g$;
- sa taille de particules $d_w$ est comprise dans un domaine de 50 à 150 nm.

14. Composition selon la revendication 13, l'oxyde de titane vérifiant l'ensemble des caractéristiques suivantes:

- sa surface BET est comprise dans un domaine de 40 à 140 $m^2/g$;
- sa taille de particules $d_w$ est comprise dans un domaine de 50 à 150 nm;
- sa vitesse de désagglomération $\alpha$ est supérieure à 5.10-2 $\mu m^{-1}/s$.

15. Composition selon l'une quelconque des revendications 1 à 14, l'agent de couplage étant un alkoxysilane polysulfuré.

16. Composition selon l'une quelconque des revendications 1 à 15, l'élastomère diénique étant choisi dans le groupe constitué par les polybutadiènes, les polyisoprènes ou du caoutchouc naturel, les copolymères de butadiène-styrène, les copolymères de butadiène-isoprène, les copolymères de butadiène-acrylonitrile, les copolymères d'isoprène-styrène, les copolymères de butadiène-styrène-isoprène ou un mélange de deux ou plus de ces composés.

17. Composition selon la revendication 16, l'élastomère diénique étant un copolymère de butadiène-styrène préparé en solution ayant une teneur en styrène comprise entre 20% et 30 % en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possédant de préférence plus de 90% de liaisons cis-1,4.

18. Composition selon l'une quelconque des revendications 1 à 15, l'élastomère diénique étant un copolymère EPDM.

19. Utilisation d'une composition de caoutchouc conforme à l'une quelconque des revendications 1 à 18, pour la fabrication d'articles en caoutchouc.

**20.** Utilisation selon la revendication 19, pour la fabrication de pneumatiques ou de produits semi-finis en caoutchouc destinés aux pneumatiques, ces produits semi-finis étant choisis dans le groupe constitué par les bandes de roulement, les sous-couches de bandes de roulement, les nappes sommet, les flancs, les nappes carcasse, les talons, les protecteurs, les chambres à air ou les gommes intérieures étanches pour pneumatique sans chambre.

**21.** Utilisation à titre de charge renforçante, dans une composition de caoutchouc diénique utilisable pour la fabrication de pneumatiques, d'un oxyde de titane ayant les caractéristiques suivantes:

- (a) sa surface spécifique BET est comprise entre 20 et 200 $m^2/g$;
- (b) sa taille moyenne (en masse) de particules, notée $d_w$, est comprise entre 20 et 400 nm;
- (c) sa vitesse de désagglomération, notée $\alpha$, mesurée au test dit de désagglomération aux ultrasons, à 100% de puissance d'une sonde ultrasons de 600 W, est supérieure à $2.10^{-2}$ $\mu m^{-1}/s$.

**22.** Procédé pour renforcer une composition de caoutchouc diénique utilisable pour la fabrication de pneumatiques, **caractérisé en ce qu'**on incorpore à cette composition à l'état cru, par malaxage thermo-mécanique, un oxyde de titane ayant les caractéristiques suivantes:

- (a) sa surface spécifique BET est comprise entre 20 et 200 $m^2/g$;
- (b) sa taille moyenne (en masse) de particules, notée $d_w$, est comprise entre 20 et 400 nm;
- (c) sa vitesse de désagglomération, notée $\alpha$, mesurée au test dit de désagglomération aux ultrasons, à 100% de puissance d'une sonde ultrasons de 600 W, est supérieure à $2.10^{-2}$ $\mu m^{-1}/s$.

**23.** Article en caoutchouc comportant une composition selon l'une quelconque des revendications 1 à 18.

**24.** Pneumatique comportant une composition de caoutchouc selon l'une quelconque des revendications 1 à 18.

**25.** Pneumatique coloré comportant une composition de caoutchouc selon l'une quelconque des revendications 1 à 18.

**26.** Bande de roulement de pneumatique à base d'une composition de caoutchouc selon l'une quelconque des revendications 1 à 18.

**27.** Bande de roulement de pneumatique colorée à base d'une composition de caoutchouc selon l'une quelconque des revendications 1 à 18.

## Claims

**1.** A rubber composition usable for the manufacture of tyres, comprising at least (i) one diene elastomer, (ii) one white filler as reinforcing filler and (iii) one (white filler/elastomer) coupling agent, **characterised in that** said white filler is formed in its entirety or in part by a titanium oxide having the following characteristics:

- (a) its specific BET surface area is between 20 and 200 $m^2/g$;
- (b) its average particle size (by mass), $d_w$, is between 20 and 400 nm;
- (c) its disagglomeration rate, $\alpha$, measured in what is called the ultrasound disagglomeration test, at 100% power of a 600-watt ultrasonic probe, is greater than $2x10^{-2}$ $\mu m^{-1}/s$.

**2.** A composition according to Claim 1, the quantity of total reinforcing filler being between 20 and 400 phr (parts by weight to one hundred parts of elastomer).

**3.** A composition according to any one of Claims 1 or 2, the BET surface area lying within a range from 30 to 150 $m^2/g$.

**4.** A composition according to any one of Claims 1 to 3, the size $d_w$ lying within a range from 30 to 200 nm.

**5.** A composition according to any one of Claims 1 to 4, the disagglomeration rate $\alpha$ being greater than $5x10^{-2}$ $\mu m^{-1}/s$.

**6.** A composition according to any one of Claims 1 to 5, the titanium oxide representing more than 50% by weight of the total reinforcing filler.

**7.** A composition according to Claim 6, the titanium oxide representing the entire reinforcing filler.

**8.** A composition according to any one of Claims 1 to 6, comprising, in addition to the titanium oxide, silica and/or alumina as reinforcing white filler.

**9.** A composition according to any one of Claims 1 to 6, comprising, in addition to the titanium oxide, one or more carbon blacks as reinforcing filler.

**10.** A composition according to any one of Claims 2 to 9, the quantity of total reinforcing filler being between 30 and 200 phr.

**11.** A composition according to any one of Claims 1 to 10, the quantity of coupling agent being between $10^{-7}$ et $10^{-5}$ mole per square metre of reinforcing white filler.

**12.** A composition according to Claim 11, the quantity of coupling agent being between $5x10^{-7}$ and $5x10^{-6}$ moles per square metre of reinforcing white filler.

**13.** A composition according to any one of Claims 4 to 12, the titanium oxide satisfying at least one of the following characteristics:

- its BET surface area lies within a range from 40 to 140 $m^2/g$;
- its particle size $d_w$ lies within a range from 50 to 150 nm.

**14.** A composition according to Claim 13, the titanium oxide satisfying all the following characteristics:

- its BET surface area lies within a range from 40 to 140 $m^2/g$;
- its particle size $d_w$ lies within a range from 50 to 150 nm;
- its disagglomeration rate $\alpha$ is greater than $5x10^{-2}$ $\mu m^{-1}/s$.

**15.** A composition according to any one of Claims 1 to 14, the coupling agent being a polysulphurised alkoxysilane.

**16.** A composition according to any one of Claims 1 to 15, the diene elastomer being selected from the group which consists of polybutadienes, polyisoprenes or natural rubber, butadiene/styrene copolymers, butadiene/isoprene copolymers, butadiene/acrylonitrile copolymers, isoprene/styrene copolymers, butadiene/styrene/isoprene copolymers, or a mixture of two or more of these compounds.

**17.** A composition according to Claim 16, the diene elastomer being a butadiene/styrene copolymer prepared in solution having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C, this butadiene/styrene copolymer possibly being used in a mixture with a polybutadiene having preferably more than 90% cis-1,4 bonds.

**18.** A composition according to any one of Claims 1 to 15, the diene elastomer being an EPDM copolymer.

**19.** The use of a rubber composition according to any one of Claims 1 to 18 for the manufacture of rubber articles.

**20.** The use according to Claim 19, for the manufacture of tyres or semi-finished rubber products intended for tyres, these semi-finished products being selected from the group comprising treads, underlayers for treads, crown plies, sidewalls, carcass plies, beads, protectors, inner tubes or airtight internal rubbers for tubeless tyres.

**21.** The use, as reinforcing filler, in a diene rubber composition usable for manufacturing tyres, of a titanium oxide having the following characteristics:

- (a) its specific BET surface area is between 20 and 200 $m^2/g$;
- (b) its average particle size (by mass), $d_w$, is between 20 and 400 nm;
- (c) its disagglomeration rate, $\alpha$, measured in what is called the ultrasound disagglomeration test, at 100% power of a 600-watt ultrasonic probe, is greater than $2x10^{-2}$ $\mu m^{-1}/s$.

**22.** A process for reinforcing a diene rubber composition usable for the manufacture of tyres, **characterised in that** a titanium oxide having the following characteristics is incorporated in this composition in the uncured state by thermomechanical kneading:

- (a) its specific BET surface area is between 20 and 200 $m^2/g$;
- (b) its average particle size (by mass), $d_w$, is between 20 and 400 nm;
- (c) its disagglomeration rate, $\alpha$, measured in what is called the ultrasound disagglomeration test, at 100% power of a 600-watt ultrasonic probe, is greater than $2x10^{-2}$ $\mu m^{-1}/s$.

**23.** A rubber article comprising a composition according to any one of Claims 1 to 18.

**24.** A tyre comprising a rubber composition according to any one of Claims 1 to 18.

**25.** A coloured tyre comprising a rubber composition according to any one of Claims 1 to 18.

**26.** A tread for a tyre based on a rubber composition according to any one of Claims 1 to 18.

**27.** A coloured tread for a tyre based on a rubber composition according to any one of Claims 1 to 18.

**Patentansprüche**

**1.** Kautschukmischung, die für die Herstellung von Luftreifen verwendbar ist und die zumindest (i) ein Dienelastomer, (ü) einen hellen Füllstoff als verstärkenden Füllstoff und (iii) ein Kupplungsmittel (heller Füllstoff/Elastomer) enthält, **dadurch gekennzeichnet, dass** der helle Füllstoff ganz oder teilweise aus einem Titanoxid mit den folgenden Eigenschaften besteht:

(a) seine spezifische BET-Oberfläche liegt im Bereich von 20 bis 200 $m^2/g$;
(b) die mittlere (auf die Masse bezogen) Größe der Partikel, die als $d_w$ bezeichnet wird, liegt im Bereich von 20 bis 400 nm;
(c) die Desagglomerationsgeschwindigkeit, die als $\alpha$ bezeichnet wird und die im so genannten Desagglomerationstest mit Ultraschall bei 100% Leistung einer Ultraschallsonde von 600 W gemessen wird, liegt über 2 - 10-2 $\mu m^{-1}/s$.

**2.** Zusammensetzung nach Anspruch 1, wobei die Gesamtmenge des verstärkenden Füllstoffs im Bereich von 20 bis 400 pce (Gewichtsteile auf 100 Teile Elastomer) liegt.

**3.** Zusammensetzung nach einem der Ansprüche 1 oder 2, wobei die BET-Oberfläche im Bereich von 30 bis 150 $m^2/g$ liegt.

**4.** Zusammensetzung nach einem der Ansprüche 1 bis 3, wobei die Größe $d_w$ im Bereich von 30 bis 200 nm liegt.

**5.** Zusammensetzung nach einem der Ansprüche 1 bis 4, wobei die Desagglomerationsgeschwindigkeit $\alpha$ über $5 \cdot 10^{-2}$ $\mu m^{-1}/s$ liegt.

**6.** Zusammensetzung nach einem der Ansprüche 1 bis 5, wobei das Titanoxid mehr als 50 Gew.-% des gesamten verstärkenden Füllstoffs ausmacht.

**7.** Zusammensetzung nach Anspruch 6, wobei das Titanoxid den gesamten verstärkenden Füllstoff ausmacht.

**8.** Zusammensetzung nach einem der Ansprüche 1 bis 6, die als verstärkenden hellen Füllstoff neben dem Titanoxid Kieselsäure und/oder Aluminiumoxid enthält.

**9.** Zusammensetzung nach einem der Ansprüche 1 bis 6, die neben dem Titanoxid als verstärkenden Füllstoff einen oder mehrere Ruße enthält.

**10.** Zusammensetzung nach einem der Ansprüche 2 bis 9, wobei die Gesamtmenge des verstärkenden Füllstoffs im Bereich von 30 bis 200 pce liegt.

**11.** Zusammensetzung nach einem der Ansprüche 1 bis 10, wobei die Menge des Kupplungsmittels im Bereich von $10^{-7}$ bis $10^{-5}$ mol/$m^2$ des verstärkenden hellen Füllstoffs liegt.

**12.** Zusammensetzung nach Anspruch 11, wobei die Menge des Kupplungsmittels im Bereich von $5 \cdot 10^{-7}$ bis $5 \cdot 10^{-6}$ mol/$m^2$ des verstärkenden hellen Füllstoffs liegt.

**13.** Zusammensetzung nach einem der Ansprüche 4 bis 12, wobei das Titanoxid mindestens eine der folgenden Eigenschaften erfüllt:

- die BET-Oberfläche liegt im Bereich von 40 bis 140 $m^2$/g; und
- seine Partikelgröße $d_w$ liegt im Bereich von 50 bis 150 nm.

**14.** Zusammensetzung nach Anspruch 13, wobei das Titanoxid alle folgenden Eigenschaften erfüllt:

- seine BET-Oberfläche liegt im Bereich von 40 bis 140 $m^2$/g;
- seine Partikelgröße $d_w$ liegt im Bereich von 50 bis 150 nm; und
- seine Desagglomerationsgeschwindigkeit $\alpha$ liegt über $5 \cdot 10^{-2}$ $\mu m^{-1}$/s.

**15.** Zusammensetzung nach einem der Ansprüche 1 bis 14, wobei das Kupplungsmittel ein polysulfidhaltiges Alkoxysilan ist.

**16.** Zusammensetzung nach einem der Ansprüche 1 bis 15, wobei das Dienelastomer unter den Polybutadienen, Polyisoprenen oder Naturkautschuk, Butadien-Styrol-Copolymeren, Butadien-Isopren-Copolymeren, Butadien-Acrylnitril-Copolymeren, Isopren-Styrol-Copolymeren, Butadien-Styrol-Isopren-Copolymeren oder einem Gemisch von zwei oder mehreren dieser Verbindungen ausgewählt ist.

**17.** Zusammensetzung nach Anspruch 16, wobei das Dienelastomer ein Butadien-Styrol-Copolymer ist, das in Lösung hergestellt wird und einen Styrolgehalt im Bereich von 20 bis 30 Gew.-%, einen Gehalt an Vinylbindungen des Butadienanteils im Bereich von 15 bis 65%, einem Gehalt an trans-1,4-Bindungen im Bereich von 20 bis 75% und eine Glasübergangstemperatur von -20 bis - 55° C aufweist, wobei dieses Butadien-Styrol-Copolymer gegebenenfalls im Gemisch mit einem Polybutadien verwendet wird, das vorzugsweise mehr als 90% cis-1,4-Bindungen aufweist.

**18.** Zusammensetzung nach einem der Ansprüche 1 bis 15, wobei das Dienelastomer ein EPDM-Copolymer ist.

**19.** Verwendung einer Kautschukmischung nach einem der Ansprüche 1 bis 18 zur Herstellung von Gegenständen aus Kautschuk.

**20.** Verwendung nach Anspruch 19 zur Herstellung von Luftreifen oder Halbfertigprodukten aus Kautschuk, die für Luftreifen vorgesehen sind, wobei diese Halbfertigprodukte unter den Laufstreifen, Unterplatten für Laufstreifen, Scheitellagen, Seitenprofilen, Karkassenlagen, Reifenwülsten, Protektoren, Luftkammern oder Innenseelen für schlauchlose Reifen ausgewählt sind.

**21.** Verwendung eines Titanoxids als verstärkenden Füllstoff in einer Dienkautschukmischung, die zur Herstellung von Luftreifen verwendbar ist, mit den folgenden Eigenschaften:

(a) seine spezifische BET-Oberfläche liegt im Bereich von 20 bis 200 $m^2$/g;
(b) seine mittlere (auf die Masse bezogen) Größe der Partikel, die als $d_w$ bezeichnet wird, liegt im Bereich von 20 bis 400 nm;
(c) seine Desagglomerationsgeschwindigkeit, die als $\alpha$ bezeichnet wird und die im so genannten Desagglomerationstest mit Ultraschall bei 100% Leistung einer Ultraschallsonde von 600 W gemessen wird, liegt über $2 \cdot 10^{-2}$ $\mu m^{-1}$/s.

**22.** Verfahren zur Verstärkung einer Dienkautschukmischung, die für die Herstellung von Luftreifen verwendbar ist, **dadurch gekennzeichnet, dass** in die Zusammensetzung in unvulkanisiertem Zustand durch thermomechanisches Kneten ein Titanoxid mit den folgenden Eigenschaften eingearbeitet wird:

(a) seine spezifische BET-Oberfläche liegt im Bereich von 20 bis 200 $m^2$/g;

(b) seine mittlere (auf die Masse bezogen) Größe der Partikel, die als $d_w$ bezeichnet wird, liegt im Bereich von 20 bis 400 nm;

(c) seine Desagglomerationsgeschwindigkeit, die als $\alpha$ bezeichnet wird und die im so genannten Desagglomerationstest mit Ultraschall bei 100% Leistung einer Ultraschallsonde von 600 W gemessen wird, liegt über $2 \cdot 10^{-2}$ $\mu m^{-1}/s$.

**23.** Gegenstand aus Kautschuk, der eine Zusammensetzung nach einem der Ansprüche 1 bis 18 enthält.

**24.** Luftreifen mit einer Kautschukmischung nach einem der Ansprüche 1 bis 18.

**25.** Farbiger Luftreifen mit einer Kautschukmischung nach einem der Ansprüche 1 bis 18.

**26.** Laufstreifen eines Luftreifens auf der Basis einer Kautschukmischung nach einem der Ansprüche 1 bis 18.

**27.** Farbiger Laufstreifen eines Luftreifens auf der Basis einer Kautschukmischung nach einem der Ansprüche 1 bis 18.

**Fig. 1**

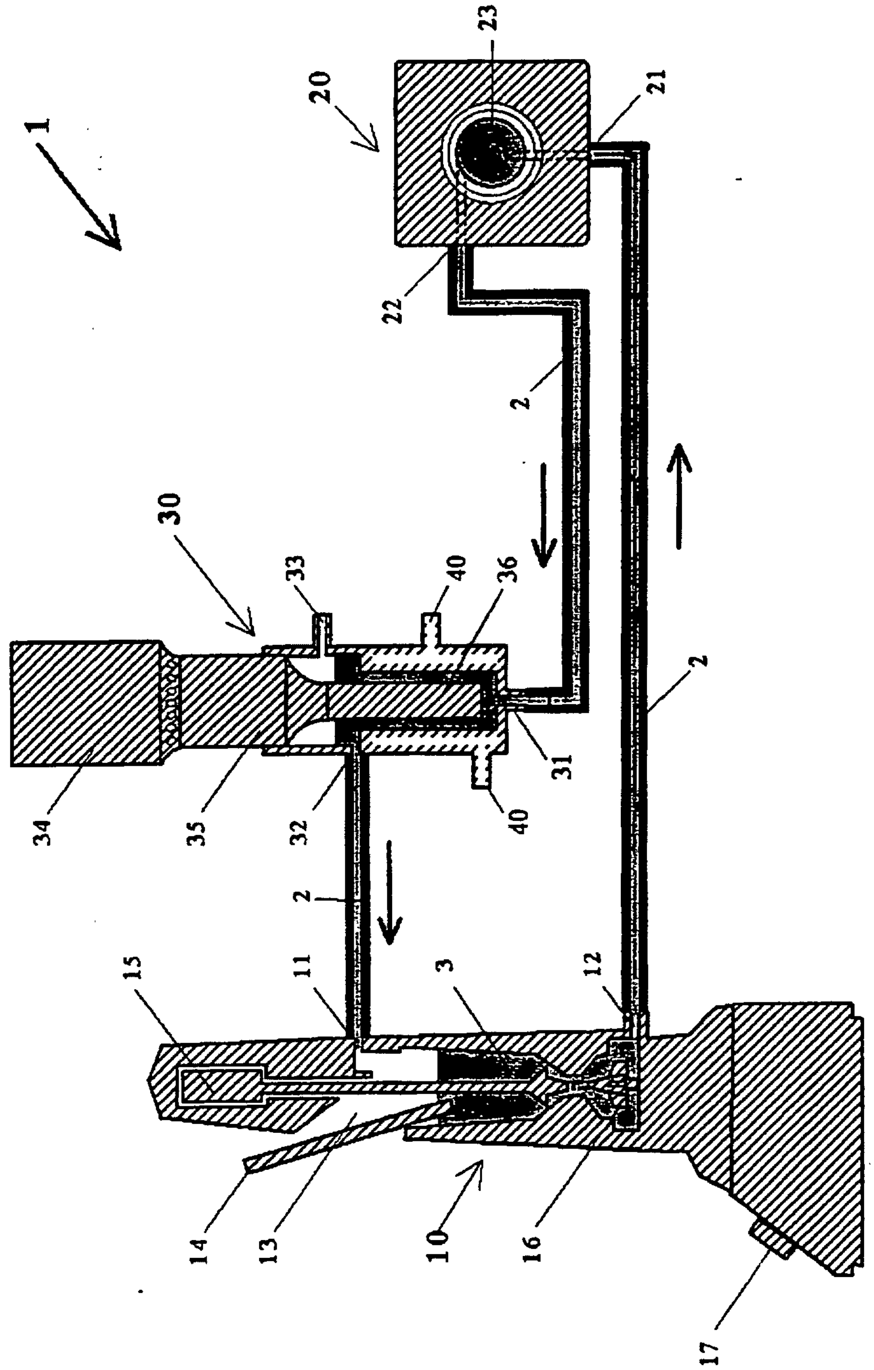

# Fig. 2

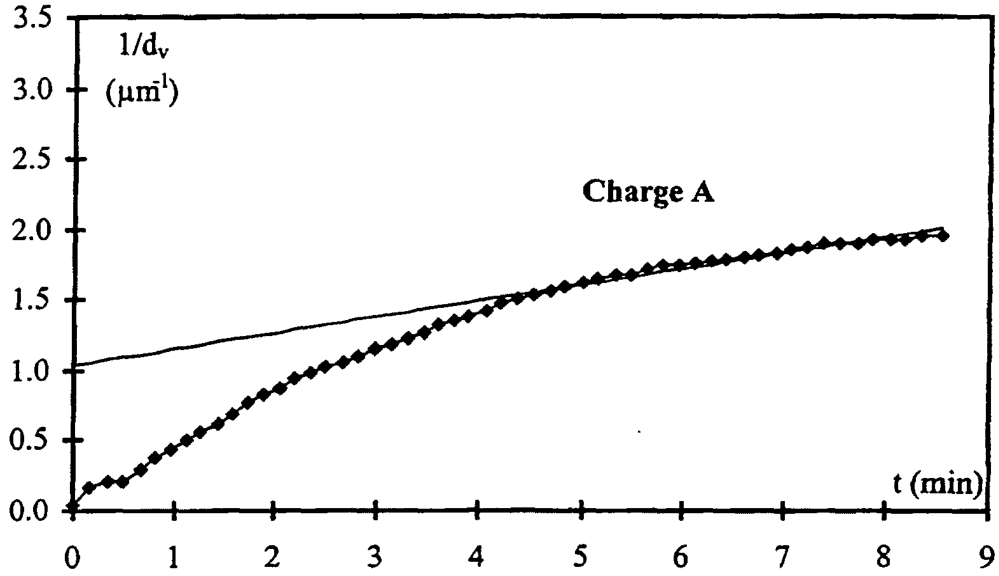

3.5
3.0
2.5
2.0
1.5
1.0
0.5
0.0
1/d_v
(µm⁻¹)
Charge A
t (min)
0
1
2
3
4
5
6
7
8
9


# Fig. 3

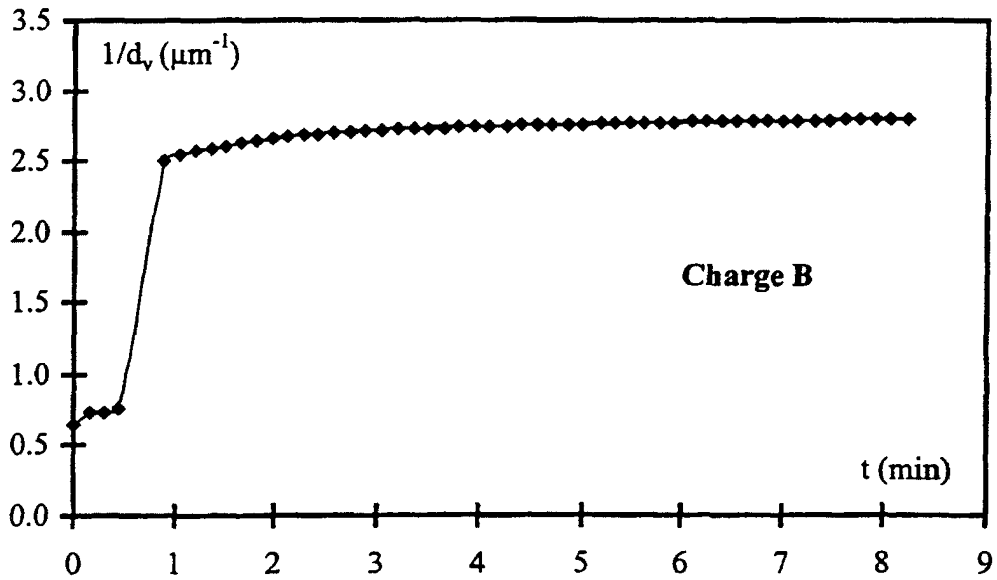

3.5
3.0
2.5
2.0
1.5
1.0
0.5
0.0
1/d_v (µm⁻¹)
Charge B
t (min)
0
1
2
3
4
5
6
7
8
9

**Fig. 4**

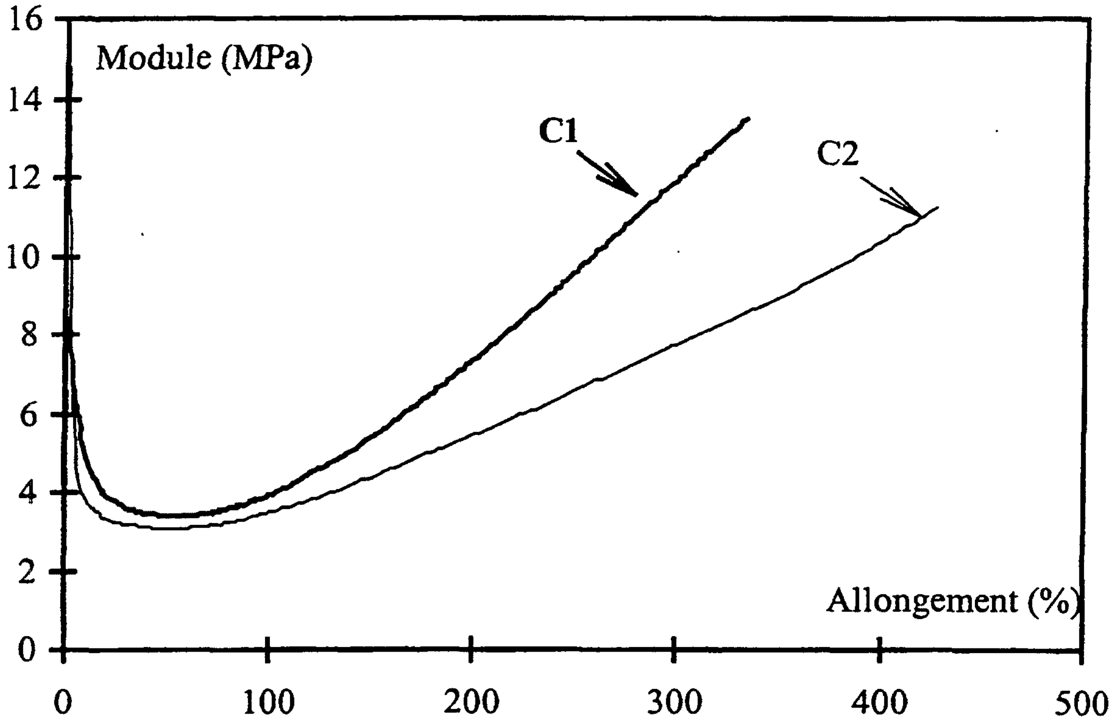
16
14
12
10
8
6
4
2
0
Module (MPa)
C1
C2
Allongement (%)
0
100
200
300
400
500